# EUROPÄISCHE PATENTSCHRIFT

(11) **EP 1 481 436 B1**
(45) Veröffentlichungstag und Bekanntmachung des Hinweises auf die Patenterteilung: **11.11.2009**
(21) Anmeldenummer: 03704687.7
(22) Anmeldetag: 25.02.2003
(51) Int. Cl.: H01M 8/04, C23F 13/02

(54) **VERFAHREN ZUR INERTISIERUNG DER ANODEN VON BRENNSTOFFZELLEN**
METHOD FOR INERTING THE ANODES OF FUEL CELLS
PROCEDE D'INERTISATION DES ANODES DE PILES A COMBUSTIBLE

(30) Priorität: 02.03.2002 DE 10209309
(43) Veröffentlichungstag der Anmeldung: 01.12.2004
(73) Patentinhaber: MTU Onsite Energy GmbH, 85521 Ottobrunn (DE)
(72) Erfinder: BEDNARZ, Marc, 85521 Ottobrunn (DE); WOSKI, Michael, 85579 Neubiberg (DE)
(74) Vertreter: Winter, Josef
(86) Internationale Anmeldenummer: PCT/EP2003/001888
(87) Internationale Veröffentlichungsnummer: WO 2003/075381

(56) Entgegenhaltungen:
- EP-A- 1 263 071
- WO-A-01/15247
- WO-A-02/19446
- DE-A- 4 236 441
- PATENT ABSTRACTS OF JAPAN vol. 016, no. 146 (E-1188), 10. April 1992 (1992-04-10) & JP 04 004570 A (HITACHI LTD), 9. Januar 1992 (1992-01-09) in der Anmeldung erwähnt
- LEE A L ET AL: "INTERNAL REFORMING DEVELOPMENT FOR SOLID OXIDE FUEL CELLS" , INDUSTRIAL AND ENGINEERING CHEMISTRY, AMERICAN CHEMICAL SOCIETY, US, VOL. 29, PAGE(S) 766-773 XP000892890 Zusammenfassung Seite 766, linke Spalte, Absatz 1
- PATENT ABSTRACTS OF JAPAN vol. 013, no. 132 (E-736), 31. März 1989 (1989-03-31) & JP 63 298974 A (FUJI ELECTRIC CO LTD), 6. Dezember 1988 (1988-12-06)
- HUIJSMANS J P P ET AL: "An analysis of endurance issues for MCFC" , JOURNAL OF POWER SOURCES, ELSEVIER SEQUOIA S.A. LAUSANNE, CH, VOL. 86, NR. 1-2, PAGE(S) 117-121 XP004194107 ISSN: 0378-7753 Seite 119, linke Spalte, Absatz 4

## Beschreibung

Die Erfindung betrifft ein Verfahren zur Inertisierung der Anoden von Brennstoffzellen, insbesondere von Hochtemperaturbrennstoffzellen. Weiterhin betrifft die Erfindung eine Brennstoffzellenanordnung, insbesondere Hochtemperaturbrennstoffzellen, mit einer oder mehreren Brennstoffzellen, die jeweils eine Anode und eine Kathode aufweisen, und mit einem Anodeneingang zur Zuführung eines Anodengases zu den Anoden.

Bei Brennstoffzellen, zum Beispiel auch Schmelzkarbonatbrennstoffzellen, besteht eine Schwierigkeit darin, dass bei Unterbrechungen des normalen Betriebs, z.B. bei Not-Aus oder beim Standby-Betrieb, wenn den Anoden kein Brenngas zugeführt wird, eine schnelle Inertisierung der Anoden erfolgen muss, um diese vor einer Beschädigung oder Zerstörung durch Oxidation zu schützen. Dies gilt insbesondere für Hochtemperaturbrennstoffzellen mit einer Betriebstemperatur ab 200°C. Bei bekannten Systemen ist es üblich, typischerweise Stickstoff als Spül- und Schutzgas zu verwenden. Wegen der benötigten Gasmengen ist es nötig, einen eigens hierfür vorgesehenen Stickstofftank vorzusehen, womit Kosten und Raumbedarf in beträchtlicher Höhe verbunden sind. Auch ist die zulässige Stillstandszeit auf die Reichweite des Spülgasvorrats begrenzt.

Aus dem japanischen Patentabstract 04004570 A ist eine Brennstoffzellenanordnung bekannt, bei der ein hauptsächlich Wasserstoff enthaltendes Standby-Gas zur Überwindung von Stillstandszeiten der Brennstoffzellenanordnung unter Beibehaltung der Betriebstemperatur der Brennstoffzellen verwendet wird. Dieses wird in einer Reformiereinrichtung erhalten, indem dieser das Brenngas in einer geringeren Menge als zum Normalbetrieb zugeführt wird. Gleichzeitig wird ein weiteres Gas, welches Kohlendioxid und Wasserstoff enthält, in einer entsprechenden Strömungsrate den Kathoden zugeführt, um elektrische Energie zur Versorgung einer Heizeinrichtung zu erhalten. Weiterhin ist aus dem japanischen Patentabstract 04324253 A eine Brennstoffzellenanordnung bekannt, bei der ein aus einem mit Stickstoff gemischten reduzierenden Gas bestehendes Standby-Gas verwendet wird, um bei Stillstandszeiten der Brennstoffzellenanordnung eine Oxidation der Anoden derselben zu verhindern.

In der US 6,127,057 wird eine Brennstoffzellenanordnung angegeben, bei der die Gasräume von Kathode und Anode mit Kühlwasser geflutet werden, das an Stelle eines Schutzgases als Schutzfluid benutzt wird.

Die DE 40 27 655 C1 zeigt ein Verfahren zum Betreiben einer H₂/O₂/H₂O-Brennstoffzelle, bei dem der Wechsel zwischen der Betriebsart Brennstoffzelle und Elektrolyse möglich ist. Beim Wechsel der Betriebsart wird eine Spülung der Zellen mit einem Inertgasstrom vorgenommen. Dadurch soll sichergestellt werden, dass sich keine Restgase aus einem vorangegangenen Zyklus in der Zelle befinden.

In der JP 2000277137 A wird ein Verfahren beschrieben, bei welchem ein aus Kohlendioxid und Stickstoff bestehendes Spülgas durch Oxidation eines Brennmittels hergestellt wird. Eine separate Bevorratung eines Standby-Gases ist somit nicht erforderlich. Nachteilig ist jedoch der erhebliche zusätzlich notwendige apparative Aufwand zur Herstellung des Schutzgases.

Die Aufgabe der Erfindung ist es, ein Verfahren zur Inertisierung der Anoden von Brennstoffzellen anzugeben, bei dem ein Standby-Gas nicht eigens bevorratet werden muss, und bei dem kein oder nur ein geringer zusätzlicher apparativer Aufwand nötig ist. Weiterhin soll durch die Erfindung eine Brennstoffzellenanordnung geschaffen werden, bei welcher eine Inertisierung der Anoden möglich ist, ohne dass ein Standby-Gas eigens bevorratet werden muss oder ein besonderer apparativer Aufwand nötig ist.

Verfahrensmäßig wird die Aufgabe durch das im Anspruch 1 angegebene Verfahren gelöst.

Vorteilhafte Weiterbildungen des erfindungsgemäßen Verfahrens sind in den Ansprüchen 2 und 3 angegeben.

Vorrichtungsmäßig wird die Aufgabe durch die im Anspruch 4 angegebene Brennstoffzellenanordnung gelöst.

Vorteilhafte Weiterbildungen der erfindungsgemäßen Vorrichtung sind in den Ansprüchen 5 bis 9 angegeben.

Durch die Erfindung wird ein Verfahren zur Inertisierung der Anoden von Brennstoffzellen, insbesondere auch von Schmelzkarbonatbrennstoffzellen geschaffen. Erfindungsgemäß ist es vorgesehen, dass den Anoden der Brennstoffzellen Wasserdampf zugeführt und an die Anoden eine externe Spannung zur Erzeugung einer reduzierenden Atmosphäre an den Anoden durch Elektrolyse angelegt wird. Das heißt, dass eine externe Spannung so angelegt wird, dass im Schutzbetrieb ein Strom in umgekehrter Stromrichtung zum Normalbetrieb fließt.

Ein Vorteil des erfindungsgemäßen Verfahrens ist es, dass eine Inertisierung der Brennstoffzellenanoden möglich ist, ohne dass eigens ein Spül- oder Schutzgas dafür vorgesehen werden muss. Ein weiterer Vorteil ist es, dass die überbrückbare Stillstandszeit nicht auf die Reichweite eines Gasvorrats beschränkt ist. Ein besonderer apparativer Aufwand entfällt, weil die bereits vorhandenen Einrichtungen benutzt werden können. Schließlich ist durch das erfindungsgemäße Verfahren ein aktiver Schutz der Brennstoffzellenanoden möglich.

Das zur Reaktion in der Anodenhalbzelle notwendige Kohlendioxid gelangt durch Diffusion aus der Kathodenhalbzelle, in der Luft anwesend ist, in die Anodenhalbzelle. Gemäß einer bevorzugten Weiterbildung des erfindungsgemäßen Verfahrens kann es jedoch vorgesehen sein, dass den Anoden zusätzlich zu dem Wasserdampf CO₂ zugeführt wird. Der Vorteil hiervon ist es, dass durch die zusätzliche Zuführung kleiner Mengen von CO₂ ein Schutz des Brennstoffzellenelektrolyten gegen eine Auflösung während des Brennstoffzellenstillstands noch besser gewährleistet ist.

Gemäß einer anderen vorteilhaften Weiterbildung des erfindungsgemäßen Verfahrens ist es vorgesehen, dass zur sofortigen Inertisierung der Anoden zunächst hauptsächlich CO₂ zugeführt wird, und dass die Menge des zugeführten CO₂ dann mit zunehmender Zuführung von Wasserdampf vermindert wird. Hierdurch wird ein sofortiger Schutz der Anoden gewährleitstet, bis der Wasserdampf in ausreichender Menge zur Verfügung steht.

Weiterhin wird durch die Erfindung eine Brennstoffzellenanordnung, insbesondere auch Schmelzkarbonatbrennstoffzellenanordnung, mit einer oder mehreren Brennstoffzellen, die jeweils eine Anode und eine Kathode aufweisen, und mit einem Anodeneingang zur Zuführung eines Anodengases zu den Anoden geschaffen. Erfindungsgemäß ist zur Inertisierung der Anoden eine Wasserdampferzeugungseinrichtung zur Zuführung von Wasserdampf zu den Anoden vorgesehen, und die Anoden sind zur Erzeugung einer reduzierenden Atmosphäre an denselben mit einer externen Spannungsquelle verbindbar, so dass im Schutzbetrieb ein Strom in umgekehrter Richtung zum Normalbetrieb fließt.

Die Vorteile sind die gleichen, wie bereits oben im Zusammenhang mit dem erfindungsgemäßen Verfahren angegeben.

Gemäß einer vorteilhaften Weiterbildung der erfindungsgemäßen Brennstoffzellenanordnung ist es vorgesehen, dass den Anoden zusätzlich zu dem Wasserdampf CO₂ zuführbar ist.

Gemäß einer anderen vorteilhaften Weiterbildung der erfindungsgemäßen Brennstoffzellenanordnung ist es vorgesehen, dass zur sofortigen Inertisierung der Anoden diesen zunächst hauptsächlich CO₂ zuführbar ist, wobei die Menge des zugeführten CO₂ dann mit zunehmender Zuführung von Wasserdampf vermindert wird.

Vorteilhafterweise kann die Wasserdampferzeugungseinrichtung zur Zuführung des Wasserdampfes zu den Anoden mit dem Anodeneingang verbunden sein.

Gemäß einer vorteilhaften Ausführungsform der erfindungsgemäßen Brennstoffzellenanordnung ist es vorgesehen, dass die Wasserdampferzeugungseinrichtung einen Katalysator enthält.

Schließlich ist es gemäß einer vorteilhaften Weiterbildung der erfindungsgemäßen Brennstoffzellenanordnung vorgesehen, dass die Wasserdampferzeugungseinrichtung gleichzeitig der Erzeugung des den Anoden zusätzlich zugeführten CO₂ dient.

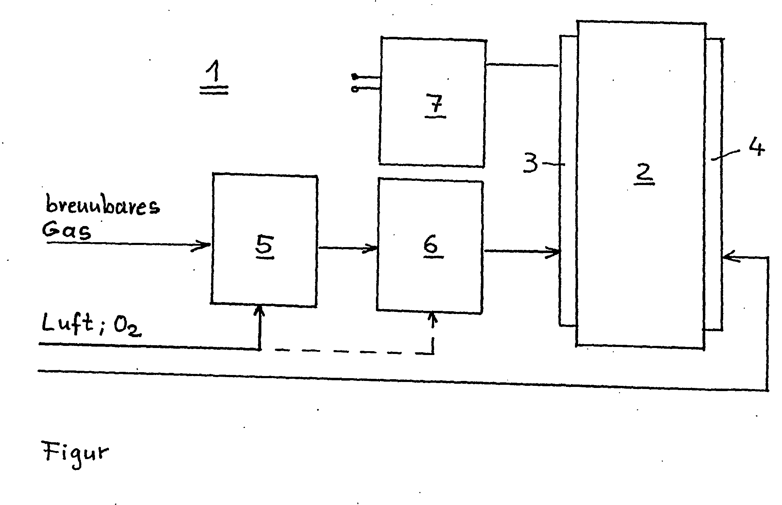

Im folgenden werden Ausführungsbeispiele der Erfindung anhand der Zeichnung erläutert.

Die Figur zeigt ein vereinfachtes Blockdiagramm einer Brennstoffzellenanordnung gemäß einem Ausführungsbeispiel der Erfindung, bei dem das erfindungsgemäße Verfahren zur Inertisierung der Anoden von den Brennstoffzellen, wie auch die erfindungsgemäße Brennstoffzellenanordnung verwirklicht sind.

In der Figur bedeutet das Bezugszeichen 1 insgesamt eine Brennstoffzellenanordnung, insbesondere eine Schmelzkarbonatbrennstoffzellenanordnung, die eine oder mehrere Brennstoffzellen 2 umfasst. In der Figur ist mit dem Bezugszeichen 2 eine Anzahl von in Form eines Brennstoffzellenstapels angeordneten Brennstoffzellen angedeutet. Die Brennstoffzellen 2 enthalten jeweils eine Anode und eine Kathode, die in der Figur nicht eigens dargestellt sind, ebenso wenig wie eine zwischen den Anoden und Kathoden vorgesehene Elektrolytmatrix. Weiterhin umfasst die Brennstoffzellenanordnung 1 einen Brenngaseingang 3 zur Zuführung eines Anodengases zu den Anoden, nämlich eines Brenngases im Normalbetrieb, und einen Kathodeneingang 4 zur Zuführung eines Kathodengases, z. B. Luft, zu den Kathoden der Brennstoffzellen 2.

Weiterhin enthält die Brennstoffzellenanordnung 1 eine Einrichtung 5, 6 zur Aufbereitung des dem Anodengaseingang zuzuführenden Anodengases. Diese umfasst eine Brenngasaufbereitungseinrichtung 5 und eine Wasserdampferzeugungseinrichtung 6. Im Normalbetrieb liefert die Einrichtung 5, 6 für den Brennstoffzellenbetrieb aufbereitetes Brenngas. Im Schutzbetrieb, wenn die Zufuhr von Brenngas zu den Anodenhalbzellen abgestellt ist, kann die Einrichtung 5, 6 dazu benutzt werden, auf katalytischem Weg ein Wasserdampf enthaltendes Gas zu erzeugen, das bei Zufuhr von Sauerstoff durch Oxidation von Brenngas entsteht. Dazu können die Brenngasaufbereitungseinrichtung 5 und/oder die Wasserdampferzeugungseinrichtung 6 einen Katalysator enthalten. Soweit auch Kohlendioxid entsteht, stört dieses das erfindungsgemäße Verfahren nicht, da es bei der nachstehend beschriebenen Reaktion benötigt wird. Andererseits ist es aber nicht notwendig Kohlendioxid über den Einlass 3 in die Anodenhalbzelle zuzuführen, da Kohlendioxid in der in der Kathodenhalbzelle anwesenden Luft zur Verfügung steht. Durch Diffusion gelangt Kohlendioxid in die Anodenhalbzelle. Es genügt somit, nur Wasserdampf bereitzustellen, der in der Wasserdampferzeugungsanlage 6 hergestellt wird. Der Wasserdampferzeugungsanlage 6 wird dann nur Wasser zugeführt, wobei die Wasserdampferzeugungsanlage 6 Wärme zur Verdampfung des Wassers erzeugt. Wasser wird auch im Normalbetrieb bei der Reformierung des Brenngases benötigt und steht deshalb auch für den Schutzbetrieb zur Verfügung.

Die Brennstoffzellenanordnung 1 enthält ferner eine Spannungsquelle 7 zur Erzeugung einer externen Spannung, die an die Anoden angelegt wird, um durch Elektrolyse eine reduzierende Atmosphäre an den Anoden zu erzeugen.

Zur Inertisierung der Anoden der Brennstoffzellen 2 bei Betriebszuständen, die nicht den Normalbetrieb der Brennstoffzellenanordnung darstellen, das heißt, wenn die Brenngaszufuhr zum Anodeneingang unterbrochen ist, bei Not-Aus oder Standby-Betrieb, wird ein Schutzbetrieb aufgenommen. Dazu wird den Anoden der Brennstoffzellen Wasserdampf zugeführt und an den Anoden durch Elektrolyse eine reduzierende Atmosphäre erzeugt. Die Funktion ist wie folgt:

### Normalbetrieb:

In der Kathodenhalbzelle wird mit der Luft Sauerstoff und Kohlendioxid zugeführt und es bilden sich doppelt negativ geladene Karbonationen (CO₃²⁻). Die Karbonationen wandern diffusionsgetrieben durch die Matrix hindurch in die Anodenhalbzellen, wo Wasserstoff zugeführt wird. Der Wasserstoff reagiert mit den Karbonationen zu Kohlendioxid und Wasser, wobei jeweils zwei Elektronen freigesetzt werden.

### Standby-Betrieb (Schutzbetrieb):

In Betriebszuständen, in denen kein Brenngas in die Anodenhalbzelle zugeführt wird, muss die Beschädigung von Anodenmaterial durch Oxidation verhindert werden. Dies geschieht dadurch, dass eine externe Spannung angelegt wird, und dass der Anodenhalbzelle Wasserdampf zugeführt wird, der mit anwesendem Kohlendioxid unter Bildung von Karbonationen zu Wasserstoff reagiert. Das notwendige Kohlendioxid gelangt über den Elektrolyt aus der Kathodenhalbzelle in die Anodenhalbzelle. Zugleich diffundieren die in der Anodenhalbzelle gebildeten doppelt negativen Karbonationen in die Kathodenhalbzelle. Die Wanderung von Kohlendioxid und Karbonationen ist diffusionsgetrieben, beruht also auf Konzentrationsunterschieden der in Anoden- und Kathodenhalbzelle anwesenden Gase. In der Anodenhalbzelle läuft somit im Standby-Betrieb gerade die umgekehrte Reaktion wie im Normalbetrieb ab. Unabdingbare Voraussetzung, dass die dargestellte Reaktion in Gang kommt, ist das Anliegen einer externen Spannung, so dass ein Strom fließt, und zwar in umgekehrter Stromflussrichtung zum Normalbetrieb (Elektrolyse). Die Spannung ist vorzugsweise so groß, dass eine mittlere Stromdichte von 5 bis 10 mA/cm² in umgekehrter Stromflussrichtung zum Normalbetrieb erreicht wird.

Zur Inertisierung der Anoden der Brennstoffzellen 2 kann diesen zusätzlich zu dem Wasserdampf CO₂ zugeführt werden. Dieses CO₂ kann zusammen bzw. gleichzeitig mit dem Wasserdampf in der Wasserdampferzeugereinrichtung 6, insbesondere auf katalytischem Wege, erzeugt werden.

Zur sofortigen Inertisierung der Anoden kann zunächst hauptsächlich CO₂ zu den Anoden zugeführt und die Menge des zugeführten CO₂ dann mit zunehmender Zuführung von Wasserdampf vermindert werden.

## Patentansprüche

1. Verfahren zur Inertisierung der Anoden von Brennstoffzellen, insbesondere von Hochtemperaturbrennstoffzellen, **dadurch gekennzeichnet, dass** den Anoden der Brennstoffzellen Wasserdampf zugeführt und an die Brennstoffzellen eine externe Spannung zur Erzeugung einer reduzierenden Atmosphäre an den Anoden durch Elektrolyse angelegt wird.

2. Verfahren nach Anspruch 1, **dadurch gekennzeichnet, dass** zusätzlich zu dem Wasserdampf den Anoden CO₂ über den Brenngaseingang (3) zugeführt wird.

3. Verfahren nach Anspruch 1 oder 2, **dadurch gekennzeichnet, dass** zur sofortigen Inertisierung der Anoden zunächst hauptsächlich CO₂ zugeführt wird, und dass die Menge des zugeführten CO₂ dann mit zunehmender Zuführung von Wasserdampf vermindert wird.

4. Brennstoffzellenanordnung, insbesondere Hochtemperaturbrennstoffzellenanordnung, mit einer oder mehreren Brennstoffzellen (2), die jeweils eine Anode und eine Kathode aufweisen, und mit einem Anodeneingang (3) zur Zuführung eines Anodengases zu den Anoden, **dadurch gekennzeichnet, dass** zur Inertisierung der Anoden eine Wasserdampferzeugungseinrichtung (6) zur Zuführung von Wasserdampf zu den Anoden vorgesehen ist, und dass die Anoden zur Erzeugung einer reduzierenden Atmosphäre an denselben mit einer externen Spannungsquelle (7) verbindbar sind.

5. Brennstoffzellenanordnung nach Anspruch 4, **dadurch gekennzeichnet, dass** den Anoden zusätzlich zu dem Wasserdampf CO₂ über den Brenngaseingang (3) zuführbar ist.

6. Brennstoffzellenanordnung nach Anspruch 4 oder 5, **dadurch gekennzeichnet, dass** zur sofortigen Inertisierung der Anoden diesen zunächst hauptsächlich CO₂ zuführbar ist, wobei die Menge des zugeführten CO₂ dann mit zunehmender Zuführung von Wasserdampf vermindert wird.

7. Brennstoffzellenanordnung nach Anspruch 4, 5 oder 6, **dadurch gekennzeichnet, dass** die Wasserdampferzeugungseinrichtung (6) zur Zuführung des Wasserdampfes zu den Anoden mit dem Anodeneingang (3) verbunden ist.

8. Brennstoffzellenanordnung nach einem der Ansprüche 4 bis 7, **dadurch gekennzeichnet, dass** die Wasserdampferzeugungseinrichtung (6) einen Katalysator enthält.

9. Brennstoffzellenanordnung nach einem der Ansprüche 4 bis 8, **dadurch gekennzeichnet, dass** die Wasserdampferzeugungseinrichtung (6) gleichzeitig der Erzeugung des den Anoden zusätzlich zugeführten CO₂ dient.

## Claims

1. Method for inerting the anodes of fuel cells, in particular of high-temperature fuel cells, **characterized in that** the anodes of the fuel cells are supplied with water vapour, and an external voltage is applied to the fuel cells in order to produce a reducing atmosphere at the anodes by electrolysis.

2. Method according to Claim 1, **characterized in that**, in addition to the water vapour, CO₂ is supplied to the anodes via the fuel gas input (3).

3. Method according to Claim 1 or 2, **characterized in that** mainly CO₂ is supplied initially for immediate inerting of the anodes, and **in that** the amount of CO₂ supplied is then reduced as the supply of water vapour increases.

4. Fuel cell arrangement, in particular a high-temperature fuel cell arrangement, having one or more fuel cells (2) which each have an anode and a cathode, and having an anode input (3) for supplying an anode gas to the anodes, **characterized in that** a water vapour production device (6) is provided for supplying water vapour to the anodes for inerting of the anodes, and **in that** the anodes can be connected to an external voltage source (7) in order to produce a reducing atmosphere adjacent to them.

5. Fuel cell arrangement according to Claim 4, **characterized in that** in addition to the water vapour, the anodes can be supplied with CO₂ via the fuel gas input (3).

6. Fuel cell arrangement according to Claim 4 or 5, **characterized in that** mainly CO₂ can be supplied initially for immediate inerting of the anodes, wherein the amount of CO₂ supplied is then reduced as the supply of water vapour increases.

7. Fuel cell arrangement according to Claim 4, 5 or 6, **characterized in that** the water vapour production device (6) is connected to the anode input (3) in order to supply water vapour to the anodes.

8. Fuel cell arrangement according to one of Claims 4 to 7, **characterized in that** the water vapour production device (6) contains a catalyst.

9. Fuel cell arrangement according to one of Claims 4 to 8, **characterized in that** the water vapour production device (6) is at the same time used to produce the CO₂ which is additionally supplied to the anodes.

## Revendications

1. Procédé d'inertisation des anodes de piles à combustible, en particulier de piles à combustible à haute température, **caractérisé en ce que** de la vapeur d'eau est acheminée vers les anodes des piles à combustible et qu'une tension externe est appliquée aux anodes par électrolyse pour générer une atmosphère réductrice.

2. Procédé selon la revendication 1, **caractérisé en ce qu'**en plus de la vapeur d'eau, du CO₂ est acheminé vers les anodes via l'entrée de gaz de combustion (3).

3. Procédé selon la revendication 1 ou 2, **caractérisé en ce que**, pour l'inertisation immédiate, principalement du CO₂ est d'abord acheminé vers les anodes et que la quantité de CO₂ acheminée est ensuite réduite au fur et à mesure que l'acheminement de vapeur d'eau augmente.

4. Dispositif de pile à combustible, en particulier dispositif de pile à combustible à haute température, comprenant une ou plusieurs piles à combustible (2), qui présentent chacune une anode et une cathode, et comprenant une entrée d'anode (3) pour l'alimentation des anodes en gaz d'anode, **caractérisé en ce que** pour l'inertisation des anodes, on prévoit un dispositif de génération de vapeur d'eau (6) pour l'acheminement de vapeur d'eau vers les anodes, et **en ce que** les anodes peuvent être raccordées à une source externe de tension (7) pour générer une atmosphère réductrice à leur niveau.

5. Dispositif de pile à combustible selon la revendication 4, **caractérisé en ce que** du CO₂ peut être acheminé vers les anodes via l'entrée de gaz de combustion (3) en plus de la vapeur d'eau.

6. Dispositif de pile à combustible selon la revendication 4 ou 5, **caractérisé en ce que**, pour l'inertisation immédiate, principalement du CO₂ est d'abord acheminé vers les anodes, puis est réduit au fur et à mesure que l'acheminement de vapeur d'eau augmente.

7. Dispositif de pile à combustible selon la revendication 4, 5 ou 6, **caractérisé en ce que** le dispositif de génération de vapeur (6) est raccordé à l'entrée des anodes (3) pour acheminer la vapeur d'eau vers les anodes.

8. Dispositif de pile à combustible selon l'une quelconque des revendications 4 à 7, **caractérisé en ce que** le dispositif de génération de vapeur (6) comprend un catalyseur.

9. Dispositif de pile à combustible selon l'une quelconque des revendications 4 à 8, **caractérisé en ce que** le dispositif de génération de vapeur (6) sert en même temps à générer le CO₂ acheminé en plus vers les anodes.
